# EUROPÄISCHE PATENTSCHRIFT

(11) **EP 0 755 832 B1**
(45) Veröffentlichungstag und Bekanntmachung des Hinweises auf die Patenterteilung: **16.05.2001**
(21) Anmeldenummer: 96110718.2
(22) Anmeldetag: 02.07.1996
(51) Int. Cl.: B60R 21/32, B60R 22/46

(54) **System zur Auslösung eines Rückhaltemittels in einem Fahrzeug**
System for triggering occupant restraint in a vehicle
Système pour déclencher un moyen de retenue dans un véhicule

(30) Priorität: 28.07.1995 DE 19527813
(43) Veröffentlichungstag der Anmeldung: 29.01.1997
(73) Patentinhaber: SIEMENS AKTIENGESELLSCHAFT, 80333 München (DE)
(72) Erfinder: Vogt, Richard, Dr., 93161 Sinzing (DE)

(56) Entgegenhaltungen:
- EP-A- 0 402 622
- EP-A- 0 471 871
- EP-A- 0 502 608
- DE-A- 4 016 047
- DE-A- 4 404 816
- DE-U- 9 012 215
- FR-A- 2 582 269
- US-A- 5 100 169

## Beschreibung

Die Erfindung betrifft ein System zur Auslösung eines Rückhaltemittels in einem Fahrzeug gemäß Oberbegriff von Patentanspruch 1.

Ein solches System (DE 39 19 376 A1) weist eine Auslöseschaltung auf, die über eine Leitung mit einer Zündeinrichtung verbunden ist. Die Zündeinrichtung enthält eine Energieversorgung und eine steuerbare Zündstufe und ist über die steuerbare Zündstufe mit einem Zündelement des Rückhaltemittels verbunden. Wird ein Entriegelungssignal von der Auslöseschaltung an die Zündeinrichtung übermittelt und von der Zündeinrichtung als solches erkannt, so wird die Zündstufe durchgeschaltet, sodaß das Zündelement durch ein auf das Entriegelungssignal folgendes Zündsignal gezündet wird.

Bei einem weiteren System zur Auslösung von Rückhaltemitteln in einem Fahrzeug (EP 0 471 871 A1) werden in einer zentral im Fahrzeug angeordneten Auslöseschaltung von einer Sensoreinrichtung zur Aufprallerkennung gelieferte Signale ausgewertet. Die Auslöseschaltung steuert bei Bedarf über eine Datenleitung mehrere Zündeinrichtungen an, die nahe bei den Rückhaltemitteln angeordnet sind. Jede Zündeinrichtung überträgt die von einer Energieversorgung - beispielsweise einem Zündkondensator der Zündeinrichtung - bereitgestellte Zündenergie auf ein Zündelement des zugeordneten Rückhaltemittels.
Solche Systeme können jedoch auch dann ihre Rückhaltemittel auslösen, wenn beispielsweise die Auslöseschaltung einen De-fect liefert. Aus dem deutschen Gebrauchsmuster DE 90 01 803 U1 ist ein System bekannt, dessen Zündelement nur dann ausgelöst wird, wenn zwei mechanische Beschleunigungssensoren und eine ein Signal eines Beschleunigungssensors auswertende elektronische Auslöseschaltung gleichzeitig ein Freigabesignal zur Auslösung liefern.

Die Druckschrift US 5 201 542 offenbart ein Gasgeneratorgehäuse, in dem ein Beschleunigungssensor angeordnet ist. Wird von dem Sensor eine ausreichende Beschleunigung erkannt, wird ein ebenfalls im Gasgeneratorgehäuse angeordnetes Zündelement gezündet.

Schließlich ist aus dem deutschen Gebrauchsmuster
DE 90 12 215 U1 eine Anordnung mit einem Zündsteuergerät und mehreren Crashsensoren in einem Fahrzeug bekannt, bei dem das zentrale Steuergerät über weitere Crashsensoren verfügt, welche als Safing-Sensoren für die dezentralen Crashsensoren fungieren. Damit sollen differenziertere Auslöseentscheidungen ermöglicht werden als wenn nur dezentrale Crashsensoren die relevanten Daten für Auslöseentscheidungen liefern.

Aufgabe der Erfindung ist es, ein System mit einer räumlich von der Auslöseschaltung getrennten Zündeinrichtung zu schaffen, das im Bedarfsfall ein Rückhaltemittel zuverlässig auslöst und gleichzeitig eine Fehlauslösung verhindert.

Die Erfindung löst die Aufgabe durch die Merkmale des Patentanspruchs 1.

Das erfindungsgemäße System weist eine Schutzeinrichtung mit einem Beschleunigungssensor auf, die Fehlauslösungen verhindert, und die insbesondere räumlich getrennt von der Auslöseschaltung bei der Zündeinrichtung angeordnet ist, und die die Zündstufe abhängig abhängig von der durch diesen Sensor festgestellten Beschleunigung sperrt oder freigibt.

Die besondere Anordnung der Schutzeinrichtung bei der Zündeinrichtung hat gegenüber einer Anordnung der Schutzeinrichtung bei der Auslöseschaltung den Vorteil, daß Störgrößen wie ein elektromagnetisches Feld, eine thermische Größe oder eine mechanische Größe, die sich nicht über das gesamte Fahrzeug erstrecken, zwar das zentrale Steuergerät mit der Auslöseschaltung, nicht aber die vom Steuergerät räumlich getrennte Zündeinrichtung mit der Schutzfunktion erfassen können und umgekehrt. In ihrer Ausdehnung begrenzte Störgrößen erfassen damit nicht alle für die Auslöseentscheidung relevanten Systemkomponenten.

Des weiteren verhindert die dezentral angeordnete Schutzeinrichtung auch Fehlauslösungen, die durch Störungen in Form von induzierten Auslöse-Datenmustern im Bereich der Datenleitung oder in den seriellen Schnittstellen der Kommunikationsteilnehmer "Auslöseschaltung" und "Zündeinrichtung" hervorgerufen werden.

Das Rückhaltemittel wird also nur dann ausgelöst, wenn die steuerbare Zündstufe der Zündeinrichtung von der Auslöseeinrichtung veranlaßt wird durchzuschalten, und wenn gleichzeitig die Schutzeinrichtung einen Zustand aufweist, der ein Zünden des Zündelements ermöglicht, wobei die Auslöseschaltung und die Schutzeinrichtung räumlich voneinander getrennt eine mechanische Größe, die sich nicht über das gesamte Fahrzeug erstrecken, zwar das zentrale Steuergerät mit der Auslöseschaltung, nicht aber die vom Steuergerät räumlich getrennte Zündeinrichtung mit der Schutzfunktion erfassen können und umgekehrt. In ihrer Ausdehnung begrenzte Störgrößen erfassen damit nicht alle für die Auslöseentscheidung relevanten Systemkomponenten.

Des weiteren verhindert die dezentral angeordnete Schutzeinrichtung auch Fehlauslösungen, die durch Störungen in Form von induzierten Auslöse-Datenmustern im Bereich der Datenleitung oder in den seriellen Schnittstellen der Kommunikationsteilnehmer "Auslöseschaltung" und "Zündeinrichtung" hervorgerufen werden.

Das Rückhaltemittel wird also nur dann ausgelöst, wenn die steuerbare Zündstufe der Zündeinrichtung von der Auslöseeinrichtung veranlaßt wird durchzuschalten, und wenn gleichzeitig die Schutzeinrichtung einen Zustand aufweist, der ein Zünden des Zündelements ermöglicht, wobei die Auslöseschaltung und die Schutzeinrichtung räumlich voneinander getrennt sind und damit lokale Störgrößen ohne Einfluß auf die Zuverlässigkeit des Systems bleiben.

Die Schutzeinrichtung ist vorzugsweise als beschleunigungsabhängig wirkender mechanischer Schalter - auch Safing-Sensor genannt - ausgebildet und damit infolge ihrer Unabhängigkeit von einer Versorgungsspannung sehr zuverlässig.

Weitere vorteilhafte Weiterbildungen der Erfindung sind in den Unteransprüchen gekennzeichnet.

Ausführungsbeispiele der Erfindung werden anhand der Zeichnung erläutert. Es zeigen:
- Figur 1:: ein System zur Auslösung von Rückhaltemitteln mit dezentral angeordneten Zündeinrichtungen, und
- Figur 2:: eine dezentral angeordnete Zündeinrichtung mit einer Schutzeinrichtung.

Gleiche Elemente in den Figuren weisen figurenübergreifend gleiche Bezugszeichen auf.

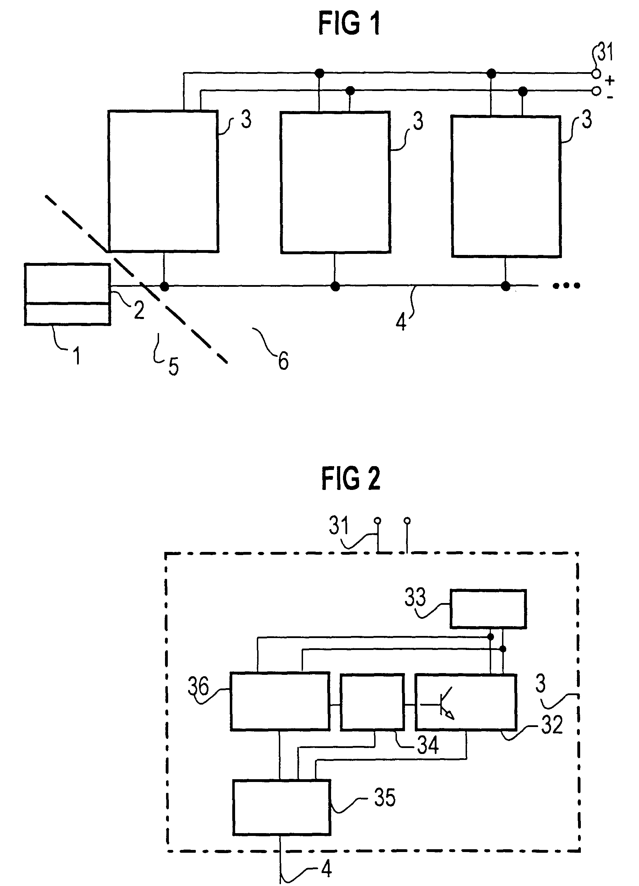

Figur 1 zeigt ein System zur Auslösung von Rückhaltemitteln in einem Fahrzeug mit verteilten Zündeinrichtungen 3, die über eine Datenleitung 4 mit einer in einem zentralen Steuergerät 5 angeordneten Auslöseschaltung 2 verbunden sind. Die Zündeinrichtungen 3 werden von einer Energieversorgung 31 gespeist. Die Zündeinrichtungen 3 sind räumlich getrennt von der Auswerteschaltung 2 und der Sensoreinrichtung 1 angeordnet, zumeist nahe bei demjenigen Rückhaltemittel 6 bzw. dessen Zündelement, das durch die jeweilige Zündeinrichtung 3 ausgelöst wird. Die Sensoreinrichtung 1 kann zentral bei der Auslöseschaltung 2 oder auch im Fahrzeug verteilt angeordnet sein. Die Auslöseschaltung 2 ist vorzugsweise als Mikroprozessor ausgebildet und verarbeitet analoge oder quasi-analoge Signale der Sensoreinrichtung 1 nach ausgewählten Algorithmen. Weist das Fahrzeug mehrere Rückhaltemittel auf, so werden die auszulösenden Rückhaltemittel in Abhängigkeit von der Schwere und der Richtung des erkannten Aufpralls ausgewählt und gegebenenfalls zeitlich versetzt angesteuert.

Ein solches System mit verteilten Zündeinrichtungen weist bekanntermaßen eine verbesserte Störsicherheit auf: Insbesondere ein versehentliches Beaufschlagen der Datenleitung mit einer Spannung - beispielsweise der Batteriespannung - führt nicht mehr zu einer Fehlauslösung von Rückhaltemitteln, da das Auslösesignal als codiertes Datenwort und nicht als hoher, energietragender Zündimpuls wie bei Systemen mit zentral angeordneten Zündeinrichtungen übertragen wird. Aufgrund des kurzen Leitungsweges zwischen Energieversorgung und Zündelement in dezentralen Zündeinrichtungen werden die Zündelemente verlustarm und nahezu verzögerungsfrei gezündet. Die Zündelemente werden als Niedrigenergiezündpillen ausgelegt. Zündkondensatoren als Reserveenergiequellen können eine geringe Kapazität aufweisen, da Verluste infolge der Leitungsübertragung bei der Berechnung der Auslöseenergie von Zündelementen nicht mehr berücksichtigt werden müssen. Des weiteren kann ein solches System auf einfache Weise um zusätzlche Rückhaltemittel erweitert werden.

Figur 3 zeigt eine verteilt angeordnete, erfindungsgemäße Zündeinrichtung 3. Die Zündeinrichtung 3 ist mit der Fahrzeugbatterie als Energieversorgung 31 verbunden. Als Energiereserve dient ein in der Figur 3 nicht dargestellter Zündkondensator, der bei einem Verlust der Batteriespannung während eines Unfalls die zur Zündung des Zündelements 33 notwendige Energie bereitstellt. Das Zündelement 33, das beispielsweise einen Fahrer-, Beifahrer-, Seiten-, Fond- oder sonstigen Airbag, Gurtstraffer, oder sonstige Rückhaltemittel zum Schutz von Fahrzeuginsassen im Bedarfsfall zündet, ist ferner mit einer steuerbaren Zündstufe 32 verbunden. Eine serielle Schnittstelle 35 empfängt Daten von der Datenleitung 4, wertet diese aus und steuert bei Erkennen eines Auslöse-Datenmusters die steuerbare Zündstufe 32, die vorzugsweise als steuerbarer Leistungstransistor ausgebildet ist, durch.

Eine Schutzeinrichtung 34 kann jedoch das Zünden des Zündelements 3 infolge des durchgesteuerten Zustands der steuerbaren Zündstufe 32 verhindern, wenn die Schutzeinrichtung 34 selbst einen Zustand des Fahrzeugs erkennt, der eine Auslösung des Rückhaltemittels nicht rechtfertigt. Die Schutzeinrichtung 34 kann als beschleunigungsabhängig wirkender mechanischer oder mirkomechanischer Schalter ausgebildet sein. Ein solcher Schalter kann direkt im Zündkreis zwischen Energieversorgung 31, steuerbarer Zündstufe 32 und Zündelement 33 angeordnet sein, sodaß ein Zündstrom von der Energieversorgung 31 über die steuerbare Zündstufe 32 zum Zündelement 33 nur dann fließen kann, wenn der Schalter geschlossen ist. Ist der Schalter nicht für das Durchschalten hoher Ströme ausgelegt, steuert er einen im Zündkreis angeordneten Leistungsschalter an.

Die Ansprechschwelle eines solchen Schalters ist derart ausgebildet, daß der Schalter bei einer auf ihn einwirkenden Beschleunigungen schließt, die kleiner ist als eine Beschleunigung, bei der das System die Rückhaltemittel auslösen soll. Durch den Schalter wird damit ein Zeitfenster für die Auslösung des Rückhaltemittels durch die Auslöseschaltung definiert.

Die Schutzeinrichtung 34 kann aber auch einen beschleunigungsabhängig wirkenden analogen oder mikromechanischen analogen Sensor mit einer zugehörigen Auswerteschaltung aufweisen. Die Auswerteschaltung wertet das Sensorsignal nach einem Algorithmus aus und vergleicht es mit einem Grenzwert. Bei Überschreiten des Grenzwerts gibt die Schutzeinrichtung ein Freigabesignal.

Ist die Schutzeinrichtung testbar, wird sie in regelmäßigen Abständen - auch im online-Betrieb des Systems - durch die Auslöseschaltung 2 getestet. Eine intelligente Schnittstelle der Zündeinrichtung 3 kann gegebenenfalls auch selbst das Testen der Schutzeinrichtung 34 übernehmen.

Eine Diagnoseeinrichtung 36 überprüft Funktionen und Parameter der Zündeinrichtung: So werden z.B der Zündelementwiderstand, die Schaltung der Zündeinrichtung 3 mit ihren Elementen und die Datenleitung 4 auf Funktionsf#higkeit überprüft. Der Datenaustausch der Diagnoseeinrichtung 36 mit der Auslöseschaltung 2 erfolgt über die Datenleitung 4.

Der Datenbus 4 kann als Eindrahtleitung, Zweidrahtleitung, optoelektronische Leitung, Datenbus oder ein sonstiges zur Datenübertragung geeignetes Medium (z.B. auch drahtlose Datenübertragung) ausgebildet sein.

Die Erfindung betrifft nicht nur ein System zur Auslösung eines Rückhaltemittels. Es können ohne weiteres auch mehrere Rückhaltemittel durch das System angesteuert werden, wobei jedem Rückhaltemittel eine Zündeinrichtung 3 zugeordnet ist oder mehreren, vorzugsweise benachbart angeordneten Rückhaltemitteln (auch mehrere einzeln aufblasbare Kammern eines Rückhaltemittels) eine gemeinsame Zündeinrichtung 3, die mehrere Zündelemente 33 ansteuert. Die einzelnen Zündeinrichtungen 3 können ausgewählt und zeitlich versetzt angesteuert werden. Jede Zündeinrichtung 3 weist dann eine eigene Schutzeinrichtung 34 auf.

Die Zündeinrichtung 3 ist vorzugsweise möglichst nahe am Zündelement 33 des Rückhaltemittels angeordnet. Die Zündeinrichtung 3 wird dabei in einem Zündpillenstecker oder einem Zündpillengehäuse des Rückhaltemittels angeordnet.

Ist die Schutzeinrichtung 34 ein integrierbarer Sensor oder ein integrierbarer Schalter, so ist abgesehen von dem Zündelement 34 die Anordnung der Zündeinrichtung 3 zusammen mit der Schutzeinrichtung 34 in einer integrierten Schaltung vorteilhaft.

## Patentansprüche

1. System zur Auslösung eines Rückhaltemittels in einem Fahrzeug, mit einer Auslöseschaltung (2), die die von einer Sensoreinrichtung (1) gelieferten Signale auswertet, und mit einer Zündeinrichtung (3), die räumlich getrennt von der Auslöseeinrichtung (2) im Fahrzeug angeordnet und über eine Datenleitung (4) mit der Auslöseschaltung (2) verbunden ist, und die eine Energieversorgung (31) und eine steuerbare Zündstufe (32) aufweist, **dadurch gekennzeichnet**, daß die Zündeinrichtung (3) eine Schutzeinrichtung (34) mit einem Beschleunigungssensor aufweist, welche die Zündstufe (32) abhängig von der durch diesen Sensor festgestellten Beschleunigung sperrt oder freigibt.

2. System nach Anspruch 1, dadurch gekennzeichnet, daß die Schutzeinrichtung (34) als beschleunigungsabhängig wirkender mechanischer Schalter ausgebildet ist.

3. System nach Anspruch 1, dadurch gekennzeichnet, daß die Schutzeinrichtung (34) als beschleunigungsabhängig wirkender mikromechanischer Schalter ausgebildet ist.

4. System nach Anspruch 1, dadurch gekennzeichnet, daß die Schutzeinrichtung (34) einen beschleunigungsabhängig wirkenden analogen Sensor und eine Auswerteschaltung aufweist.

5. System nach Anspruch 1, dadurch gekennzeichnet, daß die Schutzeinrichtung (34) einen beschleunigungsabhängig wirkenden analogen mikromechanischen Sensor und eine Auswerteschaltung aufweist.

6. System nach Anspruch 3 oder Anspruch 5, dadurch gekennzeichnet, daß eine integrierte Schaltung die Zündeinrichtung (3) mit der Schutzeinrichtung (34) enthält.

7. System nach Anspruch 1, dadurch gekennzeichnet, daß die Zündeinrichtung (3) eine Diagnoseeinrichtung (36) enthält.

8. System nach Anspruch 1, dadurch gekennzeichnet, daß die Zündeinrichtung (3) nahe bei einem Zündelement (33) des Rückhaltemittels angeordnet ist.

9. System nach Anspruch 1, dadurch gekennzeichnet, daß die Zündeinrichtung (3) in einem Zündpillenstecker des Rückhaltemittels angeordnet ist.

10. System nach Anspruch 1, dadurch gekennzeichnet, daß die Zündeinrichtung (3) in einem Zündpillengehäuse des Rückhaltemittels angeordnet ist.

## Claims

1. System for triggering a restraining means in a vehicle, having a trigger circuit (2) which evaluates the signals supplied by a sensor device (1), and having an ignition device (3) which is arranged spatially separate from the trigger device (2) in the vehicle and is connected to the trigger circuit (2) via a data line (4), and which has a power supply (31) and a controllable ignition stage (32), characterized in that the ignition device (3) has a protective device (34) with an acceleration sensor, which protective device blocks or enables the ignition stage (32) as a function of the acceleration determined by this sensor.

2. System according to Claim 1, characterized in that the protective device (34) is designed as a mechanical switch acting as a function of acceleration.

3. System according to Claim 1, characterized in that the protective device (34) is designed as a micromechanical switch acting as a function of acceleration.

4. System according to Claim 1, characterized in that the protective device (34) has an analog sensor acting as a function of acceleration, and an evaluation circuit.

5. System according to Claim 1, characterized in that the protective device (34) has an analog micromechanical sensor acting as a function of acceleration, and an evaluation circuit.

6. System according to Claim 3 or Claim 5, characterized in that an integrated circuit contains the ignition device (3) with the protective device (34).

7. System according to Claim 1, characterized in that the ignition device (3) contains a diagnostic device (36).

8. System according to Claim 1, characterized in that the ignition device (3) is arranged close to an ignition element (33) of the restraining means.

9. System according to Claim 1, characterized in that the ignition device (3) is arranged in an ignitor connector of the restraining means.

10. System according to Claim 1, characterized in that the ignition device (3) is arranged in an ignitor housing of the restraining means.

## Revendications

1. Système pour déclencher un moyen de retenue dans un véhicule, avec un circuit déclencheur (2) qui exploite les signaux fournis par un dispositif de capteur (1), et avec un dispositif d'allumage (3) qui, spatialement séparé du dispositif déclencheur (2), est placé dans le véhicule et relié au circuit déclencheur (2) par une ligne de données (4) et qui présente une alimentation en énergie (31) et un étage d'allumage (32) commandable, caractérisé en ce que le dispositif d'allumage (3) présente un dispositif de protection (34) avec un capteur d'accélération, qui bloque ou libère l'étage d'allumage (32) en fonction de l'accélération déterminée par ce capteur.

2. Système selon la revendication 1, caractérisé en ce que le dispositif de protection (34) est réalisé sous forme d'interrupteur mécanique agissant en fonction de l'accélération.

3. Système selon la revendication 1, caractérisé en ce que le dispositif de protection (34) est réalisé sous forme d'interrupteur micromécanique agissant en fonction de l'accélération.

4. Système selon la revendication 1, caractérisé en ce que le dispositif de protection (34) présente un capteur analogique agissant en fonction de l'accélération et un circuit d'évaluation.

5. Système selon la revendication 1, caractérisé en ce que le dispositif de protection (34) présente un capteur micromécanique analogique agissant en fonction de l'accélération et un circuit d'évaluation.

6. Système selon la revendication 3 ou la revendication 5, caractérisé en ce qu'un circuit intégré comprend le dispositif d'allumage (3) avec le dispositif de protection (34).

7. Système selon la revendication 1, caractérisé en ce que le dispositif d'allumage (3) comprend un dispositif de diagnostic (36).

8. Système selon la revendication 1, caractérisé en ce que le dispositif d'allumage (3) est placé à proximité d'un élément d'allumage (33) du moyen de retenue.

9. Système selon la revendication 1, caractérisé en ce que le dispositif d'allumage (3) est placé dans une fiche d'amorce du moyen de retenue.

10. Système selon la revendication 1, caractérisé en ce que le dispositif d'allumage (3) est placé dans un boîtier d'amorce du moyen de retenue.
